# EUROPEAN PATENT APPLICATION

(11) **EP 4 454 471 A1**
(43) Date of publication of application: **30.10.2024**
(21) Application number: 23170878.5
(22) Date of filing: 28.04.2023
(51) Int. Cl.: A23C 9/18, A23C 11/06, A23J 3/16, A23L 33/00, A23P 10/40

(54) **INFANT FORMULA POWDERS WITH IMPROVED FLOW CHARACTERISTICS**

(71) Applicant: N.V. Nutricia, 2712 HM Zoetermeer (NL)
(72) Inventor: Saharawat, Ashish, Auckland (NZ); Zhao, Tracy, Auckland (NZ); Patel, Priyanka, Auckland (NZ); Das, Shantanu, Auckland (NZ)
(74) Representative: Nederlandsch Octrooibureau

(57) **Abstract**

The present invention concerns a powdered nutritional composition comprising dairy protein and plant-based protein with improved organoleptic properties and flowability, a dry-blending process for obtaining the nutritional composition and a method for providing nutrition to a subject comprising administering the nutritional composition.

## Description

### TECHNICAL FIELD OF THE INVENTION

The present invention is in the field of nutrition and relates to a nutritional composition comprising plant-based protein.

### BACKGROUND OF THE INVENTION

Usually, infant formula and other milk-like formula typically comprises dairy protein. Plant-based protein has been an important source of nutrition, but are uncommon in formula, especially for infants or children. The flavour, taste and/or production methods limit the application of plant-based protein in formula.

WO2012/157571 disclosed a liquid food which has a physiologically preferable viscous property compared to a liquid food having an extremely low viscosity. CN111149868 published a high-speed instant bean powder as well as a preparation method and application thereof. The high-speed instant bean powder comprises silicon dioxide, sodium carboxymethylcellulose and soybean milk powder. CN102379349A disclosed a highly concentrated soybean milk and soybean milk sugar beans and a preparation method thereof.

There is still a relevant need in the art for nutritional compositions which contain a plant-based protein source but have the organoleptic properties of dairy protein. The present invention provides in this need.

### SUMMARY OF THE INVENTION

The inventors have surprisingly found that a nutritional composition, comprising carbohydrates, diary protein and plant-based protein, wherein the weight ratio of the diary protein and soybean protein is in the range of 55/45 - 90/10, has an excellent flavor and at the same time an improved flowability index. Surprisingly, substantial amounts of dairy protein could be replaces by soy protein without compromising the dairy flavor of the composition. At the same time, the nutritional composition according to the invention, when in powder form, has an optimal flowability index, which is envisioned to improve the reconstitution behavior of the composition.

Another aspect of the invention is a process of obtaining the nutritional composition of the invention in a powder form comprising:
a. providing a dairy protein fraction in powdered form;
b. providing a soy protein fraction in powdered form;
c. dry blending the dairy protein fraction and the soy protein fraction; and optionally,
d. dry-blending additional nutritional ingredients comprising one or more of vitamins premix, DHA, probiotics, prebiotics, vegetable fats in powder form
to provide the nutritional composition.

Surprisingly, the nutritional compositions of the invention have provided successful solutions in achieving (i) a much better flowability index of the powder composition; (ii) the flavour of which has been significantly improved to be more mild and milk-like, and therefore more acceptable to infants and children; and (iii) the taste of the combination of the dairy protein and soy protein has been improved giving the opportunity to offer plant-based choices without compromising on nutrition. Because of the more friendly taste, the nutritional composition will be more acceptable to relevant subjects such as infants, toddlers or adults and therefore can help to provide more diversified nutrition choices. Furthermore, the application of plant-based protein is more sustainable and environmental-friendly. Therefore, the invention is helpful in reduction of carbon emission to the earth.

### DETAILED DESCRIPTION OF THE INVENTION

### Definitions

The term "plant-based protein" refers to a kind of protein that originates from plants. Plant-based proteins are typically isolated from plants. Herein the plant is typically selected from cereals and legumes, preferably from rice, wheat, beans and soy.

"Flowability index" refers to powder fluidity, which is an important property of powders. Measuring and improving the fluidity of powder is of great significance to its production process, transportation, storage and filling. The powder fluidity testing methods mainly include QIH Index method, specific surface method and Jenike method. In this invention, the flowability index is measured via the Standard Flow Function method.

In this document and in its claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the elements is present, unless the context clearly requires that there be one and only one of the elements. The indefinite article "a" or "an" thus usually means "at least one".

### The invention

The invention this concerns a nutritional composition, comprising carbohydrates, diary protein and plant-based protein, wherein the weight ratio of the diary protein and soybean protein is in the range of 55/45 - 90/10, has an excellent flavor and at the same time an improved flowability index.

Also provided is a method for preparing the nutritional composition according to the invention, and a method for providing nutrition to a subject, comprising administering the nutritional composition to the subject. All what is described here below for the nutritional composition according to the invention also applies to both methods according to the invention, and vice versa.

The nutritional composition according to the invention is in powder form, or in liquid form after reconstitution of the powderous nutritional composition. As will be understood by the skilled person, the improved flowability index applies to the nutritional composition in powder form, whereas the improved organoleptic properties normally apply to the nutritional composition in liquid form. The powder according to the invention may also have improved organoleptic properties, i.e. more like milk powder, yet is typically not consumed as such but only after dissolution or reconstitution.

As such, the invention offers a plant-based nutritional composition with improved organoleptic properties that offers the opportunity for increasing the content of plant-based ingredients. The application of plant-based proteins is sustainable and environmental-friendly over the application of dairy proteins. Also, the improved flowability index offers an improvement in the production process, transportation, storage and filling of the powder according to the invention. Additionally, the user benefits from the nutritional composition according to the invention in view of better user experience during dissolution of the powder.

### Subject

Preferably, the subject is a human subject, such as a human infant or a human adult. Most preferably, the subject is a human infant.

In one embodiment, the subject is a human infant. In the context of the present invention, infants refer to subjects having an age of 0 - 36 months. Preferably, the human subject is an infant aged 0 - 36 months, even more preferably 0-12 months, and most preferably 0-6 months. If the subject is a human infant, preferably the infant is at risk of having a compromised microbiota and is typically selected from the group of infants born via caesarean section, preterm infants, infants born from a mother who received intrapartum antibiotics, infants receiving or having received antibiotics, infants receiving or having received proton pump inhibitors, formula fed infants, or combinations thereof.

If the human subject is an infant, the nutritional composition is preferably selected from infant formula, follow-on formula and young child formula. Most preferably, the nutritional composition is an infant formula. The terms "infant formula" or "follow-on formula" or "young child formula" as used herein mean that the composition is artificially made or in other words that it is "synthetic". This means that the nutritional composition is not unprocessed mammalian milk. The nutritional composition according to the invention typically does not comprise human milk or human milk protein.

In the present invention, "infant formula" refers to nutritional compositions intended for infants of 0 to about 6 months of age and are intended as a substitute for human milk. Typically, infant formulae are suitable to be used as sole source of nutrition. Such infant formulae are also known as starter formula. "Follow-on formula" are intended for infants starting at 4 to 6 months of age to 12 months of age, and are intended to be supplementary feedings for infants that start weaning on other foods. Infant formulae and follow-on formulae are subject to strict regulations, for example for the EU regulations no. 609/2013 and no. 2016/127. In the present context, "young child formula" refers to nutritional compositions, artificially made, intended for infants of 12 months to 36 months of age, which are intended to be supplementary feedings for infants. In the context of the present invention, young child formula can also be referred to as growing-up milk.

In an alternative embodiment, the human subject is an adult. Milk-like reconstitionable nutritional compositions in powder form for adults are known, e.g. as medical nutrition (also referred to as medical formula) or as creamer for e.g. coffee. Thus, in one embodiment, the subject is a patient in need of medical nutrition, such as a hospitalized patient.

As the nutritional composition according to the invention typically provides a complete nutrition, i.e. all nutrients needed for the subject on a daily basis, it is preferred that the nutritional composition is an infant formula, follow-on formula, young child formula or medical formula, more preferably an infant formula, follow-on formula or young child formula, most preferably an infant formula.

### Fatty acid composition

The nutritional composition preferably contains a lipid or fat fraction. Suitable lipid fractions for nutritional compositions, such as for infant formulas, follow-on formulas, young child formulas and medical formulas, are known in the art and can be used as deemed fit by the skilled person. Preferably, the lipid fractions contains PUFAs, preferably n-3 and/or n-6 PUFAs, more preferably at least DHA, EPA, ARA and/or ALA. Preferably, the nutritional composition comprises n-3 LC-PUFA, such as EPA, ALA and/or DHA, more preferably DHA. As the conversion of ALA to DHA may be less efficient in infants, preferably both ALA and DHA are present in the nutritional composition for infants.

Herein, LA refers to linoleic acid and/or acyl chain (18:2 n6); ALA refers to alpha-linolenic acid and/or acyl chain (18:3 n3); SFA relates to saturated fatty acids and/or acyl chains, MUFA relates to mono-unsaturated fatty acid and/or acyl chains, PUFA refers to polyunsaturated fatty acids and/or acyl chains with 2 or more unsaturated bonds; LC-PUFA refers to long chain polyunsaturated fatty acids and/or acyl chains comprising at least 20 carbon atoms in the fatty acyl chain and with 2 or more unsaturated bonds; DHA refers to docosahexaenoic acid and/or acyl chain (22:6, n3); EPA refers to eicosapentaenoic acid and/or acyl chain (20:5 n3); ARA refers to arachidonic acid and/or acyl chain (20:4 n6); DPA refers to docosapentaenoic acid and/or acyl chain (22:5 n3). PA relates to palmitic acid and/or acyl chains (C16:0). Medium chain fatty acids (MCFA) refer to fatty acids and/or acyl chains with a chain length of 6, 8 or 10 carbon atoms. n-3 or omega 3 PUFA refers to polyunsaturated fatty acids and/or acyl chains with 2 or more unsaturated bonds and with an unsaturated bond at the third carbon atom from the methyl end of the fatty acyl chain, n-6 or omega 6 PUFA refers to polyunsaturated fatty acids and/or acyl chains with 2 or more unsaturated bonds and with an unsaturated bond at the sixth carbon atom from the methyl end of the fatty acyl chain. BA refers to butyric acid (4:0).

The nutritional composition according to the present preferably comprises LA. LA is an n6 PUFA and the precursor of n6 LC-PUFA and is an essential fatty acid as it cannot be synthesized by the human body. LA preferably is present in a sufficient amount in order to promote a healthy growth and development, yet in an amount as low as possible to prevent negative, competitive, effects on the formation of n3 PUFA and a too high n6/n3 ratio. The nutritional composition therefore preferably comprises less than 25 wt.% , more preferably less than 20 wt.%, more preferably less than 15 wt.% LA based on total fatty acids. The nutritional composition preferably comprises at least 5 wt.% LA based on fatty acids, preferably at least 7.5 wt.%, more preferably at least 10 wt.% based on total fatty acids.

The nutritional composition preferably comprises ALA. ALA is a n3 PUFA and the precursor of n3 LC-PUFA and is an essential fatty acid as it cannot be synthesized by the human body. Preferably ALA is present in a sufficient amount to promote a healthy growth and development of the infant. The nutritional composition therefore preferably comprises at least 0.5 wt.%, more preferably at least 1.0 wt.%, more preferably the nutritional composition comprises at least 1.5 wt.%, even more preferably at least 2.0 wt.% ALA based on total fatty acids. Preferably the nutritional composition comprises less than 10 wt.% ALA, more preferably less than 5.0 wt.% based on total fatty acids.

The weight ratio LA/ALA preferably is well balanced in order to ensure an optimal n6/n3 PUFA, n6/n3 LC PUFA and DHA/ARA ratio in the cellular membranes. Therefore, the nutritional composition preferably comprises a weight ratio of LA/ALA from 2 to 20, more preferably from 3 to 15, more preferably from 5 to 12, more preferably from 5 to 10. Preferably the n6 PUFA/n3 PUFA weight ratio is from 3 to 20, more preferably from 3 to 15, more preferably from 5 to 12, more preferably from 5 to 10.

Preferably, the nutritional composition comprises n3 LC-PUFA, such as EPA, DPA and/or DHA, more preferably DHA. Preferably the nutritional composition comprises at least 0.05 wt.%, preferably at least 0.1 wt.%, more preferably at least 0.4 wt.%, of DHA based on total fatty acids. Preferably the nutritional composition comprises not more than 4.0, preferably not more than 2.0 wt.%, more preferably not more than 1.0 wt.%, of DHA based on total fatty acids. Thus, preferably the nutritional composition comprises 0.05-4 wt.%, more preferably 0.1-2 wt.%, and most preferably 0.2-1 wt.%, of DHA based on total fatty acids.

The nutritional composition preferably comprises ARA. Preferably the nutritional composition comprises at least 0.1 wt.%, preferably at least 0.2 wt.%, more preferably at least 0.4 wt.%, of ARA based on total fatty acids. As the group of n6 fatty acids, especially arachidonic acid (ARA) counteracts the group of n3 fatty acids, especially DHA, the nutritional composition preferably comprises relatively low amounts of ARA. Preferably the nutritional composition comprises not more than 4.0 wt.%, preferably not more than 2.0 wt.%, of ARA based on total fatty acids, most preferably not more than 1.0 wt.%, of ARA based on total fatty acids. Thus, preferably the nutritional composition comprises 0.1-4 wt.%, more preferably 0.2-2 wt.%, most preferably 0.4-1 wt.% of ARA based on total fatty acids. Preferably the weight ratio between DHA and ARA is between 1/5 to 5/1, more preferably between 1/3 to 3/1, more preferably between 2:1 and 1:2.

### Protein

The nutritional composition comprises protein. The term 'protein' as used herein refers to the sum of proteins, peptides and free amino acids. The protein fraction comprises a combination of dairy protein and soy protein. Preferably, the nutritional composition comprises no further protein than the dairy protein and soy protein, although other proteins may be present in the nutritional composition without deviating from the concept of the invention.

The weight ratio of dairy protein to soy protein in the nutritional composition is in the range of 55/45 - 90/10, preferably in the range of 55/45 - 75/25, most preferably in the range of 55/45 - 70/30. In such ratio, the combination of dairy protein and soy protein offers the advantages of the present invention in terms of organoleptic properties and flowability of the powder.

The protein preferably provides 5 - 23 %, preferably 5 - 20 % of the total calories. Preferably the nutritional composition comprises protein that provides 6 - 12 % of the total calories. Preferably, protein is present in the nutritional composition below 4.0 gram, preferably below 3.5 gram per 100 kcal, more preferably the nutritional composition comprises between 1.5 and 4 g protein, more preferably 1.7 and 3.0 g protein per 100 kcal. Such relatively low protein concentration is advantageously close to human milk, which comprises a lower amount of protein based on total calories than cow's milk. Preferably, the composition does not comprise partially hydrolysed protein and free amino acids.

Preferably, the nutritional composition comprises 5 - 25 wt.% protein, based on dry weight of the composition, more preferably 5 - 20 wt.% protein, more preferably 7 - 17 wt.% protein, most preferably 9 - 14 wt.%. When in liquid form, e.g. as a ready-to-feed liquid after reconstitution, the composition preferably provides 0.6 to 3.5 g protein per 100 ml, more preferably 0.6 to 3.0 g per 100 ml, even more preferably between 0.8 and 2.5 g per 100 ml, most preferably between 1.0 and 2.0 g per 100 ml.

Preferred plant protein sources that may be present in addition to the soy protein include pea protein, potato protein and combinations thereof. A suitable source of the soy protein is soy protein isolate.

Preferred dairy protein sources are a derived from bovine, goat, donkey, sheep, buffalo, or camel milk and combinations thereof. Most preferably, the protein is bovine dairy protein. The dairy protein preferably comprises whey protein, casein or a combination thereof. The nutritional composition preferably comprises casein and whey proteins in a weight ratio casein : whey protein of 10 : 90 to 90 : 10, more preferably 20 : 80 to 80 : 20, most preferably between 60 : 40 to 30 : 70.

The nutritional composition according to the invention preferably comprises intact, non-hydrolysed protein. Intact protein is protein in its naturally occurring form without being broken down into peptides. The term "intact protein" as used herein refers to protein not having been subjected to (enzymatic) hydrolysis.

### Digestible carbohydrates

The nutritional composition comprises digestible carbohydrates. The digestible carbohydrates preferably provide 20 to 80% of the total calories of the nutritional composition. Preferably the digestible carbohydrates provide 40 to 65% of the total calories. Based on calories the nutritional composition preferably comprises of 5 to 20 g of digestible carbohydrates per 100 kcal, more preferably 6 to 16 g. Based on dry weight the nutritional composition preferably comprises 25 to 75 wt.%, more preferably 35 to 55 wt.% digestible carbohydrates.

When in liquid form, e.g. as a ready-to-feed liquid after reconstitution, the nutritional composition preferably comprises 3 to 20 g digestible carbohydrate per 100 ml, more preferably 4 to 15 g per 100 ml, even more preferably 5 to 10 g digestible carbohydrate per 100 ml.

Preferred digestible carbohydrate sources are lactose, glucose, sucrose, fructose, galactose, maltose, starch and maltodextrin. Lactose is the main digestible carbohydrate present in human milk. Lactose advantageously has a low glycemic index. The nutritional composition preferably comprises lactose. The nutritional composition preferably comprises digestible carbohydrate, wherein at least 35 wt.%, more preferably at least 50 wt.%, more preferably at least 75 wt.%, even more preferably at least 90 wt.%, most preferably at least 95 wt.% of the digestible carbohydrate is lactose. Based on dry weight the nutritional composition preferably comprises at least 25 wt.% lactose, preferably at least 40 wt.%.

The nutritional composition preferably comprises digestible carbohydrates. Based on dry weight the nutritional composition preferably comprises 20 to 80 wt.%, more preferably 40 to 65 wt.% digestible carbohydrates.

### Non-digestible carbohydrates

As used herein, the term "non-digestible carbohydrate" refers to oligosaccharides which are not digested in the intestine by the action of acids or digestive enzymes present in the human upper digestive tract, e.g. small intestine and stomach, but reach the distal portions of the intestines, such as the colon, intact where they are fermented by the human intestinal microbiota. For example, sucrose, lactose, maltose and maltodextrins are considered digestible saccharides.

Microbial metabolites of non-digestible carbohydrates include short chain fatty acids (SCFA), for example acetate, propionate, butyrate, lactate, among others. The inventors have found that the presence of the fermentation products of non-digestible carbohydrates, *i.e*. SCFA's, significantly reduces apoptosis of gut epithelial cells.

In one embodiment the nutritional composition preferably comprises non-digestible oligosaccharides. Preferably the nutritional composition comprises non-digestible oligosaccharides with a degree of polymerization (DP) between 2 and 250, more preferably 3 and 60. In an especially preferred embodiment, the DP is below 40, i.e. between 2 and 40, preferably between 3 and 40. The non-digestible oligosaccharides advantageously further promote digestibility and digestive comfort in human infants. Such non-digestible oligosaccharides typically act as prebiotic. Advantageously and most preferred, the prebiotic oligosaccharides are water-soluble (according to the method disclosed in L. Prosky et al, J. Assoc. Anal. Chem 71: 1017-1023, 1988).

Preferably, the nutritional composition comprises 80 mg to 4 g non-digestible oligosaccharides per 100 ml, more preferably 150 mg to 2 g, even more preferably 300 mg to 1 g non-digestible carbohydrates per 100 ml. Based on dry weight, the nutritional composition preferably comprises 0.25 wt.% to 25 wt.%, more preferably 0.5 wt.% to 10 wt.%, even more preferably 1.5 wt.% to 7.5 wt.%. Expressed per 100 g of the composition, non-digestible oligosaccharides may be present in an amount of at least 3 g per 100 g composition, more preferably 3.5 - 8 g per 100 g composition. A lower amount of non-digestible oligosaccharides will be less effective promoting digestibility, whereas a too high amount will result in side-effects of bloating and abdominal discomfort.

Suitable oligosaccharides are at least one, more preferably at least two, preferably at least three selected from the group consisting of fructo-oligosaccharides, galacto-oligosaccharides, xylo-oligosaccharides, arabino-oligosaccharides, arabinogalacto-oligosaccharides, gluco-oligosaccharides, chito-oligosaccharides, glucomanno-oligosaccharides, galactomanno-oligosaccharides, mannan-oligosaccharides, and uronic acid oligosaccharides. The group of fructo-oligosaccharides includes inulins, the group of galacto-oligosaccharides includes transgalacto-oligosaccharides or beta-galacto-oligosaccharides, the group of gluco-oligosaccharides includes cyclodextrins, gentio- and nigero-oligosaccharides and non-digestible polydextrose, the group of galactomanno-oligosaccharides includes partially hydrolyzed guar gum, and the group of uronic acid oligosaccharides includes pectin degradation products (e.g. prepared from apple pectin, beet pectin and/or citrus pectin).

Preferably the nutritional composition comprises fructo-oligosaccharides, galacto-oligosaccharides and/or galacturonic acid oligosaccharides, more preferably fructo-oligosaccharides and/or galacto-oligosaccharides, even more preferably galacto-oligosaccharides, most preferably transgalacto-oligosaccharides. In a preferred embodiment the nutritional composition comprises a mixture of galacto-oligosaccharides and fructo-oligosaccharides, more preferably transgalacto-oligosaccharides and fructo-oligosaccharides. Suitable non-digestible oligosaccharides are for example Vivinal^{®}GOS (FrieslandCampina DOMO), Raftilin^{®}HP or Raftilose^{®} (Orafti).

More preferably, the composition comprises fructo-oligosaccharides and galacto-oligosaccharides at a weight ratio between (20 to 2):1, more preferably (20 to 2):1, even more preferably (20 to 2):1, even more preferably (12 to 7):1. Most preferably the weight ratio is about 9:1.

The galacto-oligosaccharides preferably are beta-galacto-oligosaccharides. In a particularly preferred embodiment the present composition comprises beta-galacto-oligosaccharides ([galactose]n-glucose; wherein n is an integer ranging from 2 to 60, i.e. 2, 3, 4, 5, 6, .... , 59, 60; preferably n is selected from 2, 3, 4, 5, 6, 7, 8, 9, and 10), wherein the galactose units are in majority linked together via a beta linkage. Beta-galacto-oligosaccharides are also referred to as trans-galacto-oligosaccharides (TOS). Beta-galacto-oligosaccharides are for example sold under the trademark Vivinal^{™} (Borculo Domo Ingredients, Netherlands). Another suitable source is Bi2Munno (Classado). Preferably the TOS comprises at least 80% beta-1,4 and beta-1,6 linkages based on total linkages, more preferably at least 90%.

Fructo-oligosaccharide is a prebiotic oligosaccharide comprising a chain of beta-linked fructose units with a DP or average DP of 2 to 250, more preferably 2 to 100, even more preferably 10 to 60. Fructo-oligosaccharide includes inulin, levan and/or a mixed type of polyfructan. An especially preferred fructo-oligosaccharide is inulin. Fructo-oligosaccharide suitable for use in the compositions is also commercially available, e.g. Raftiline^{®}HP (Orafti). Preferably the fructo-oligosaccharide has an average DP above 20.

In one preferred embodiment, the composition according to the invention comprises prebiotic oligosaccharides only, *i.e*., the composition does not comprise human milk oligosaccharides. In an alternative embodiment, the nutritional composition according to the invention comprises human milk oligosaccharides. In one preferred embodiment, the composition according to the invention comprises human milk oligosaccharides only, *i.e*., the composition does not comprise prebiotic oligosaccharides as defined above. "Human milk oligosaccharides" (HMOs) are present in human milk and are non-digestible carbohydrates built from the following monomers: D-glucose, D-galactose, N-acetylglucosamine, L-fucose and sialic acid (N-acetylneuraminic acid).

Preferably, the composition of the invention comprises human milk oligosaccharides selected from the group comprising, but not limited to, sialyloligosaccharides, such as 3-sialyllactose (3-SL), 6-sialyllactose (6-SL), lactosialyltetrasaccharide a,b,c (LST), disialyllactoNtetraose (DSLNT), sialyl-lactoNhexaose (S-LNH), DS-LNH, and fucooligosaccharide, such as (un)sulphated fucoidan oligosaccharide, 2'-fucosyllactose (2'- FL), 3-fucosyllactose (3-FL), difucosyllactose, lacto-N-fucopenatose, (LNFP) I, II, III, IV Lacto-N-neofucopenaose (LNnFP), Lacto-N-difucosyl-hexaose (LNDH), and mixtures thereof. Preferably, human milk oligosaccharides are selected from 2'-fucosyllactose (2'-FL), 3-fucosyllactose (3-FL), 3-sialyllactose (3-SL), 6-sialyllactose (6-SL), lacto-N-tetrose (LNT), lacto-N-neotetrose (LNnT), or combinations thereof. The nutritional composition of the present invention more preferably comprises at least one human milk oligosaccharide selected from the group consisting of 2'-FL, 3-FL, 3'-SL and 6'-SL. Most preferably, the composition comprises 2'-FL. Based on dry weight, the present nutritional composition preferably comprises 0.038 wt.% to 12 wt.% HMOs, preferably 0.075 wt.% to 9 wt.% HMOs, more preferably 0.15 wt.% to 6 wt.% HMOs, even more preferably 0.3 wt.% to 2.5 wt.% HMOs. Expressed differently, the composition comprises human milk oligosaccharides in an amount of 0.5 mg to 5 g per 100 ml of the composition, preferably 1.0 mg to 4.5 g per 100 ml of the composition, more preferably 0.5 g to 4.0 g per 100 ml of the composition, even more preferably 1.0 g to 3.5 g per 100 ml of the composition, most preferably 1.5 g to 3.0 g/100 ml of the composition. The amounts expressed per ml of the composition refer to ready-to-drink nutritional composition in liquid form, i.e. after reconstitution. Based on energy, the present nutritional composition preferably comprises 0.008 to 2.5 g HMOs per 100 kcal, preferably 0.015 to 2.5 g HMOs per 100 kcal, more preferably 0.03 to 1.0 g HMOs per 100 kcal, even more preferably 0.06 to 0.5 g HMOs per 100 kcal. A too high amount will result in an increase the risk of osmotic diarrhea, which will counteract the beneficial effects of the mix.

In a preferred embodiment, a nutritional composition according to the invention comprises at least 0.005 g of the sum of 2'-FL, 3-FL, 3'-SL and 6'-SL per 100 ml, more preferably at least 0.01 g, more preferably at least 0.02 g, even more preferably at least 0.04 g of the sum of 2'-FL, 3-FL, 3'-SL and 6'-SL per 100 ml. Based on dry weight, the present nutritional composition preferably comprises at least 0.038 wt.% of the sum of 5 2'-FL, 3-FL, 3'-SL and 6'-SL, more preferably at least 0.075 wt.%, more preferably at least 0.15 wt.% of the sum of 2'-FL, 3-FL, 3'-SL and 6'-SL, even more preferably at least 0.3 wt.%. Based on energy, the present nutritional composition preferably comprises at least 0.008 g of the sum of 2'-FL, 3-FL, 3'-SL and 6'-SL per 100 kcal, more preferably at least 0.015 g per 100 kcal, more preferably at least 0.03 g per 100 kcal, even more preferably at least 0.06 per 100 kcal.

Preferably the nutritional composition according to the invention comprises as a HMOS essentially 2'-FL, that means at least 95 wt.% of the HMOS consists of 2'-FL. Preferably, a nutritional composition according to the invention comprises 0.01 g to 1 g 2'-FL per 100 ml, more preferably 0.02 g to 0.5 g, even more preferably 0.04 g to 0.2 g 2'-FL per 100 ml. Based on dry weight, the present nutritional composition preferably comprises 0.075 wt.% to 8 wt.% 2'-FL, more preferably 0.15 wt.% to 4 wt.% 2'-FL, even more preferably 0.3 wt.% to 1.5 wt.% 2'-FL. Based on energy, the present nutritional composition preferably comprises 0.015 to 1.5 g 2'-FL per 100 kcal, more preferably 0.03 to 0.75 g 2'-FL per 100 kcal, even more preferably 0.06 to 0.4 g 2'-FL per 100 kcal.

2'-FL (α-L-Fuc-(1→2)-β-D-Gal-(1→4)-D-Glc) is commercially available for instance from Sigma-Aldrich. Alternatively, it can be isolated from human milk, for example as described in Andersson & Donald, 1981, J Chromatogr. 211:170-1744, or produced by genetically modified micro-organisms, for example as described in Albermann et al, 2001, Carbohydrate Res. 334:97-103.

In yet another preferred embodiment, a mixture of prebiotic oligosaccharides and human milk oligosaccharides is present. Preferably, the composition comprises at least two different non-digestible carbohydrates wherein at least two non-digestible carbohydrates are selected from either the group of prebiotics oligosaccharides or from the group of human milk oligosaccharides. More preferably, the composition comprises galacto-oligosaccharide and fructo-oligosaccharide in combination with 2'-FL and/or LNT, preferably with 2'-FL.

Preferably, the weight ratio of human milk oligosaccharides (for instance FL, preferably 2'-FL) to prebiotic oligosaccharide (preferably, galacto-oligosaccharide) is from 5 to 0.05, more preferably 5 to 0.1, more preferably from 2 to 0.1. Preferably the weight ratio human milk oligosaccharides (for instance FL, preferably 2'-FL) to prebiotic oligosaccharide (preferably, fructo-oligosaccharide, more preferably inulin) is from 10 to 0.05, more preferably 10 to 0.1, more preferably from 2 to 0.5.

### Probiotic

The nutritional composition preferably comprises probiotic bacteria. The probiotic bacteria content of the nutritional composition is preferably in the range 10⁴ - 10¹² cfu/100g of dry weight, more preferably 10⁷ - 10¹¹ cfu/100g of dry weight.

Preferably the probiotic bacteria is selected from *Bifidobacterium* and/or *Lactobacillus.* More preferably, the nutritional composition comprises *Bifidobacterium,* even more preferably *Bifidobacterium breve,* and most preferably *Bifidobacterium breve M-16V.*

### Nutritional composition

The nutritional composition according to the present invention is preferably an infant formula, a follow on formula or a growing up milk (also called young child formula). This means that the composition that is administered is not human milk. It also means that the composition that is administered is not native cow's milk or native milk from another mammal. Alternatively the terms as used herein, "infant formula" or "follow on formula" or "growing up milk" or "young child formula" means that it concerns a composition that is artificially made or in other words that it is synthetic.

The nutritional composition preferably comprises 3 to 7 g lipid/100 kcal, preferably 4 to 6 g lipid/100 kcal, more preferably 4.5 to 5.5 g lipid/100 kcal, preferably comprises 1.7 to 5 g protein/100 kcal, preferably 1.8 to 3.5 g protein/100 kcal. The nutritional composition preferably comprises 5 to 20 g digestible carbohydrate/100 kcal, preferably 6 to 16 g digestible carbohydrate/100 kcal, more preferably 10 to 15 g digestible carbohydrate/100 kcal.

In a preferred embodiment, the nutritional composition is a powder. The powder may be reconstituted with aqueous liquid to prepare a liquid formula. Such liquid formula prepared by reconstitution are also part of the invention. Typically, the liquid formula is orally administered to the subject. Preferably, the aqueous liquid used for reconstitution is water. In an alternative embodiment, the nutritional composition is a concentrated liquid, a supplement, or a ready-to-drink nutritional composition obtained from reconstitution of the powderous nutritional composition according to the invention.

The nutritional composition according to the invention has an improved flowability index, as shown in the examples. In a preferred embodiment, the flowability index of the nutritional composition is below 0.23, more preferably below 0.22, such as in the range of 0.1 - 0.21, preferably in the range of 0.12 - 0.20, most preferably in the range of 0.14 - 0.19.

The flowability index can be determined by any suitable method in the art. Typically, in the context of the present invention, the flowability index is determined by the Standard Flow Function method. Such a method is for example available for the Brookfield PFT Powder Flow Tester Rheometer, which is preferably used to determine the flowability index in the context of the present invention.

### Method for providing nutrition

In a further aspect, the invention concerns a method for providing nutrition to a subject, wherein the nutritional composition according to the invention is administered to the subject. The subject is further defined above.

In view of the improved organoleptic properties, the nutritional composition is ideally suited as plant-based infant formula, follow on formula or young child formula. In view of the predisposition of infants towards milk, significant deviation from milk is not possible for such products. The present invention thus provides in the need for providing a nutritional composition which is well-tolerated by infants in view of the milk-like organoleptic properties, yet comprising significant amounts of plant-based protein.

Further, in view of the improved flowability index, the nutritional compositions are ideally suited as reconstitutable powder. This offers an advantage not only during production of the powder, but also for the user who reconstitutes the powder in a liquid to obtain the final nutritional composition that is to be administered. In view of the improved flowability index, the nutritional composition according to the invention is readily reconstituted. It is believed that the improved flowability index leads to an improved dissolution behaviour of the powders, thus giving better dissolved liquid nutritional compositions.

The method according to this aspect typically comprises a step of reconstituting the nutritional composition in powder form with an aqueous liquid to form a liquid nutritional composition which is to be administered.

### Method for producing the nutritional composition according to the invention

In a further aspect, the invention concerns a method for producing the nutritional composition according to the invention. The method according to this aspect comprises:
a. providing a dairy protein fraction in powdered form;
b. providing a soy protein fraction in powdered form;
c. dry blending the dairy protein fraction and the soy protein fraction; and optionally,
d. dry-blending additional nutritional ingredients comprising one or more of vitamins premix, DHA, probiotics, prebiotics, vegetable fats in powder form

The process according to the invention is a dry-blending process, and can be performed in any way known in the art. In one embodiment, the dry-blending is performed in a blender. The process according to the invention is entirely performed with only powdered ingredients in a dry state. It is preferred that the dairy protein fraction is comprised within a base powder further comprising vitamins, minerals and lipids. Such base powders are well-known in the field of infant formula manufacture. In such an instance, step (d) may not be needed, of all desired ingredients are already present in the protein fraction of step (a). In step (d), additional ingredients are dry-blended with the protein composition, which included one or more of vitamins, DHA, probiotics, prebiotics and vegetable fats in powder form. Preferably, at least vitamins, DHA and vegetable fats are dry-blended, if not already present in the fractions of step (a) and/or (b).

In one embodiment according to the invention, the dry-blending process does not comprise a spray-drying step. The ingredients that are subjected to the process according to the invention may be spraydried prior to step (c).

Surprisingly, the dry-blended powders have an improved flowability index. It is further speculated that dry-blending without spray-drying results in more compact powder and thereby reducing oxygen transfer within the powder and resulting in a more milk-like flavour. Therefore, the nutritional composition according to the invention can also be defined as being obtainable by a dry-blending process, preferably by the process according to the present aspect.

Advantageously, the process according to the invention reduces process costs and is more economical as the complex wet-blending process of the protein fractions is avoided. Dry-blending process is much simpler in comparison to wet-blending, as it only requires a short processing time (much shorter than actual hydrolysis or time required for spray-drying) and also the equipment required is of lower complexity. The benefit of the process according to the invention is that through the dry-blending of the two powdered fractions, no capital investment is needed to introduce two distinct protein fractions into the composition, whereas a wet-blending facility with mixing silos and spray-dryers requires a huge investment.

### EXAMPLES

Three infant formulas, three follow-on formulas and three young child formulas were prepared by dry-blending the ingredients. The dairy protein powder and a soybean powder were pre-mixed. Additional nutritional ingredients in powder form were dry-blended with the protein mix. These included a vitamins premix, DHA, prebiotics and vegetable fats in powder form. The products were in line with the legal requirements of infant formulas, follow-on formulas and young child formulas.

Each of the three infant formulas, follow-on formulas and young child formulas varied in the composition of the protein mix, see tables 1 - 3 below. All nine compositions were subjected to an aroma and taste test. A test panel blindly tested the aroma and taste of the compositions. Further, the flowability index of all nine compositions was tested using the Standard Flow Function method using the Brookfield PFT Powder Flow Tester Rheometer. The powder was scooped into and evenly distributed throughout the powder unit. A standard flow function test was run according to the apparatus. The results of those tests are reported in Tables 1 - 3.

**Table-1 Example and comparative example of IF**

| Composition | IF1 | IF2 | IF3 |
|---|---|---|---|
| Formulation | 60% dairy protein + 40% soy protein | 50% dairy protein + 50% soy protein | 40% dairy protein + 60% soy protein |
| Flowability Index | 0.20 | 0.22 | 0.23 |
| Liquid Aroma | Soy is quite apparent, more soy than diary | Soy is quite apparent, more soy than diary | Soy intensity strong, no diary aroma at all |
| Liquid Taste | Soy intensity is medium, cereal notes | Soy intensity is stronger than IF1, cereal notes, mouthcoating | Soy intensity strong, like soy milk, after texture coating tongue, astringent |

**Table-2 Examples and Comparative Examples of FO**

| Item | FO1 | FO2 | FO3 |
|---|---|---|---|
| Formulation | 60% dairy protein + 40% soy protein | 50% dairy protein + 50% soy protein | 40% dairy protein + 60% soy protein |
| Flowability Index | 0.20 | 0.22 | 0.23 |
| Liquid Aroma | More milky, not as strong soy smell, weak intensity | Soy and diary intensities similar, cannot clearly identify protein source | Soy intensity strong, weak milky taste |
| Liquid Taste | More milky, thin texture, weak soy taste | Milky, cooked, medium intensity for soy | Mainly soy and cereal notes |

**Table-3 Examples and Comparative Examples of YCF**

| Composition | YCF1 | YCF2 | YCF3 |
|---|---|---|---|
| Formulation | 60% dairy protein + 40% soy protein | 50% dairy protein + 50% soy protein | 40% dairy protein + 60% soy protein |
| Flowability Index | 0.18 | 0.20 | 0.21 |
| Liquid Aroma | More milky, not as strong soy smell, weak intensity | Soy and diary intensities similar, can't clearly identify protein source | Soy intensity strong, weak milky taste |
| Liquid Taste | More milky, thin texture, weak soy taste | Milky, cooked, medium intensity for soy | Mainly soy and cereal notes |

From above data, the inventors surprisingly found that, by adjusting the ratio of the dairy protein and soy protein, not only the flowability index of the powder composition was significantly improved, but also the flavour has been adjusted to be more mild and milk-like, and therefore more acceptable to infants or children. The taste of the combination of the dairy protein and soy protein has been successfully improved towards plant-based choices without compromising on nutrition. Moreover, because of the more friendly taste, it will be more acceptable to relevant people including infants or toddlers and therefore can help to provide more diversified nutrition choices.

## Claims

1. A nutritional composition comprising carbohydrates, diary protein and plant-based protein, wherein the weight ratio of the diary protein and soybean protein is in the range of 55/45 - 90/10.

2. The nutritional composition according to claim 1, wherein the weight ratio of the diary protein and soybean protein is in the range of 55/45 - 75/25, most preferably in the range of 55/45 - 70/30.

3. The nutritional composition according to claim 1 or 2, wherein the nutritional composition is a powder having a flowability index below 0.23, preferably below 0.22.

4. The nutritional composition according to any one of the preceding claims, wherein the diary protein is cow milk protein.

5. The nutritional composition according to any one of preceding claims, wherein the composition further comprises non-digestible carbohydrates, preferably non-digestible oligosaccharides.

6. The nutritional composition according to claim 5, wherein the non-digestible oligosaccharides are selected from prebiotic oligosaccharides, human milk oligosaccharides, and a combination thereof.

7. The nutritional composition according to any one of preceding claims, wherein the composition further comprises one or more of vitamins, DHA, probiotics, prebiotics, vegetable fats.

8. The nutritional composition according to any one of the preceding claims, wherein the powder is prepared by dry-blending.

9. The nutritional composition according to any one of the preceding claims, wherein the nutritional composition is obtainable by a process comprising:
a. providing a dairy protein fraction in powdered form;
b. providing a soy protein fraction in powdered form;
c. dry blending the dairy protein fraction and the soy protein fraction; and optionally
d. dry-blending additional nutritional ingredients comprising one or more of vitamins, DHA, probiotics, prebiotics, vegetable fats in powder form.

10. The nutritional composition according to any one of the preceding claims, which is an infant formula, follow-on formula, young child formula or medical formula, more preferably an infant formula, follow-on formula or young child formula, most preferably an infant formula

11. A method for preparing the nutritional composition according to any one of claims 1-10, comprising:
a. providing a dairy protein fraction in powdered form;
b. providing a soy protein fraction in powdered form;
c. dry blending the dairy protein fraction and the soy protein fraction; and optionally
d. dry-blending additional nutritional ingredients comprising one or more of vitamins, DHA, probiotics, prebiotics, vegetable fats in powder form.to provide the nutritional composition.

12. A method for providing nutrition to a subject, comprising administering the nutritional composition according to any one of claims 1-10 to the subject.

13. The method according to claim 12, wherein the subject is a human infant or a hospitalized adult.

14. The method according to claim 12 or 13, which further comprises reconstituting the nutritional composition in powder form with an aqueous liquid to form a liquid nutritional composition which is to be administered.
